# FASCICULE DE BREVET EUROPEEN

(11) **EP 0 251 863 B1**
(45) Date de publication et mention de la délivrance du brevet: **21.04.1993**
(21) Numéro de dépôt: 87401368.3
(22) Date de dépôt: 17.06.1987
(51) Int. Cl.: G01F 11/02

(54) **Ensemble doseur pour un produit pâteux ou semi-liquide**
Dosiereinheit für ein pappiges oder dickflüssiges Produkt
Dosing unit for a pasty or semi-liquid product

(30) Priorité: 17.06.1986 FR 8608704; 26.03.1987 FR 8704211
(43) Date de publication de la demande: 07.01.1988
(73) Titulaire: VALOIS Société Anonyme dite:, 27110 Le Neubourg (FR)
(72) Inventeur: Brunet, Michel, F-27840 Sainte Colombe La Commanderie (FR); Jouillat, Claude, F-28270 Montigny Sur Avre (FR)
(74) Mandataire: Pinguet, André

(56) Documents cités:
- DE-A- 3 137 760
- FR-A- 819 094
- FR-A- 2 084 918
- FR-A- 2 305 241
- FR-A- 2 343 137
- FR-A- 2 562 444
- FR-A- 4 437 582
- US-A- 3 388 839
- US-A- 3 580 429

## Description

La présente invention a pour objet un ensemble doseur pour un produit páteux ou semi-liquide, contenu dans un tube souple, en metal ou en plastique, du genre tube dentifrice, que l'on écrase pour en faire sortir le contenu.

On connait les dispositifs du genre de celui decrit dans FR-A-2 240 161. Ces dispositifs comportent un bouchon doseur monté sur un récipient à double paroi, constitué d'un récipient souple logé à l'intérieur d'un récipient extérieur rigide. Il existe d'autres systèmes doseurs montés sur des tubes dont le fond est constitué par un piston qui remonte pendant que le tube se vide. En fait, il n'existe pas de dispositif doseur pouvant être monté simplement et directement sur un tube souple que l'on tient dans la main, et dont on fait sortir le contenu par pression

On connaît également des dispositifs du genre décrit dans US-A-3 580 429, destiné à distribuer des doses de savon liquide, comprenant un magasin formé par une poche souple pour recevoir le savon, montée sur un distributeur ayant un corps de pompe constitué par un cylindre avec piston rappele a une position de repos par un ressort. Le cylindre comporte à une extrémité une ouverture d'entrée obturable par le piston en début de course, et un clapet de sortie à l'autre extrémité. Le clapet de sortie, de type classique, sert simplement de passage a sens unique de sorte que si, l'appareil étant au repos, le produit à distribuer est exposé à une pression suffisante, par exemple par appui sur la poche du magasin le produit s'echappe et la poche peut se vider.

D'autre part, un dispositif destiné à vaporiser un produit, comportant en combinaison
- un récipient pour contenir le produit,
- une pompe doseuse pour distribuer le produit, fonctionnant sans remise à l'air libre du récipient, ladite pompe comportant un corps de pompe avec un piston mobile dans le corps de pompe à partir d'une position de repos et définissant une chambre de dosage, ladite pompe comportant en outre un orifice obturable d'aspiration et un orifice obturable de refoulement, l'orifice d'aspiration étant obturé lorsque le piston est déplacé en s'éloignant de sa position de repos, et l'orifice de refoulement étant obturé lorsque le piston est déplacé vers sa position de repos,
dans lequel la pompe comporte en outre un ressort de rappel qui sollicite le piston vers sa position de repos, l'orifice de refoulement est obturable par un organe d'obturation sollicité par un ressort de précompression vers une position où il obture l'orfice de refoulement, et lorsque le piston est déplacé à partir de sa position de repos, l'organe d'obturation n'ouvre l'orifice de refoulement que lorsqu'il règne dans la chambre de dosage une pression supérieure à un seuil prédéterminé, est connu de FR-A-2 343 137 ou de FR-A-2 305 241.

La présente invention a pour objet un ensemble comportant une poche souple et un dispositif doseur, où l'on puisse appuyer sur la poche (tube dentifrice) pour bien remplir, ou surtout amorcer le doseur, sans risquer de faire sortir du produit par l'orifice de refoulement.

Ce résultat est obtenu, conformément à la présente invention, par un dispositif d'ensemble doseur pour produit pâteux ou semi-liquide tel que défini dans la revendication 1, comportant en combinaison un tube souple en métal ou en plastique, et un système doseur avec pompe sans remise à l'air libre comportant un corps de pompe, avec un piston mobile dans le corps de pompe à partir d'une position de repos définissant une chambre de dosage, un orifice obturable d'aspiration, un orifice obturable de refoulement et un poussoir pour commander le mouvement du piston par l'intermédiaire d'une tige, le piston étant rappelé vers la position de repos par un ressort de rappel, la tige de piston comportant un canal central servant au refoulement du produit dosé, ce canal débouchant dans la chambre de dosage en y formant un siège de clapet de l'orifice obturable de refoulement, et un clapet est sollicité contre ledit siège par le ressort de rappel du piston, l'ouverture du clapet de refoulement étant commandée par déplacement de la tige par action sur le poussoir et ledit clapet étant disposé de façon que dans la position de repos du système doseur, une surpression dans la chambre de dosage applique le clapet contre le siège de clapet de l'orifice de refoulement, caractérisé en ce que ledit tube souple est accessible de façon qu'un utilisateur puisse le presser manuellement pour faciliter le remplissage et/ou l'amorçage du système doseur.

Dans une forme de réalisation de l'invention, le piston est monté à mouvement perdu sur la tige, l'orifice de refoulement étant formé par l'ouverture d'un passage radial faisant communiquer le canal interne de la tige de piston avec l'extérieur, le piston étant rappelé par un ressort à une position dans laquelle il obture ledit orifice, qui peut être dégagé par déplacement de la tige par action sur le poussoir.

Dans une autre forme de réalisation, le canal central de la tige de piston débouche dans la chambre de dosage au centre du piston où il forme un siège de clapet, et un clapet comportant un pointeau est appliqué par le ressort de rappel contre ledit siège, ledit clapet étant muni d'une jupe pouvant coopérer par emboitement avec un cylindre pour obturer l'orifice d'aspiration, quand le clapet est repoussé par le piston sous l'action du poussoir.

D'autres caractéristiques de l'invention apparaîtront mieux à la lecture de la description qui va suivre, donnee à titre d'exemple non limitatif, en regard des dessins ci-joints, et qui fera bien comprendre comment l'invention peut être réalisée.

Sur les dessins
la figure 1 est une vue en coupe d'un ensemble constitué d'un tube souple et d'un dispositif doseur, conformement a l'invention, en position de repos ,
la figure 2 est une vue du même ensemble, à une position intermediaire ;
la figure 3 est une vue analogue à la figure 1 pour une variante ,
la figure 4 est une vue en élévation avec coupe partielle d'un mode de liaison d'un doseur avec un tube souple :
On va maintenant expliquer l'invention en décrivant l'association à des tubes souples de diverses pompes de types connus, indiquées ici à titre d'exemple de doseur qui peut être associe a un tube souple.

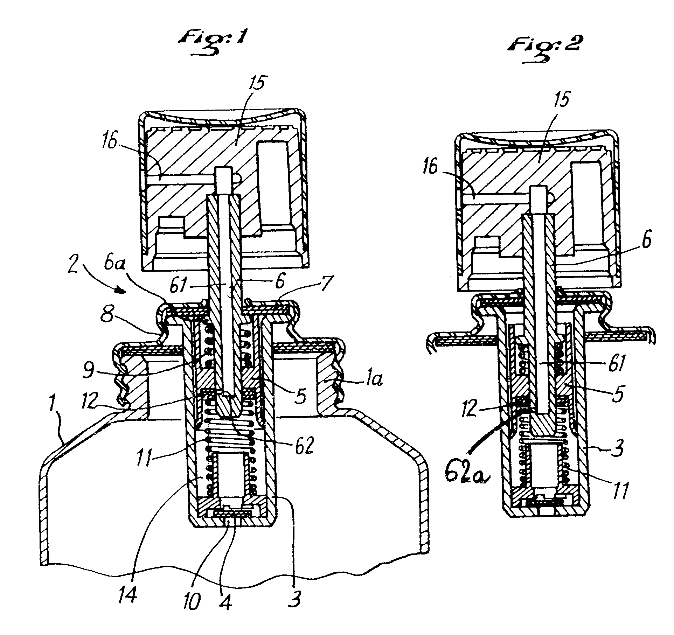

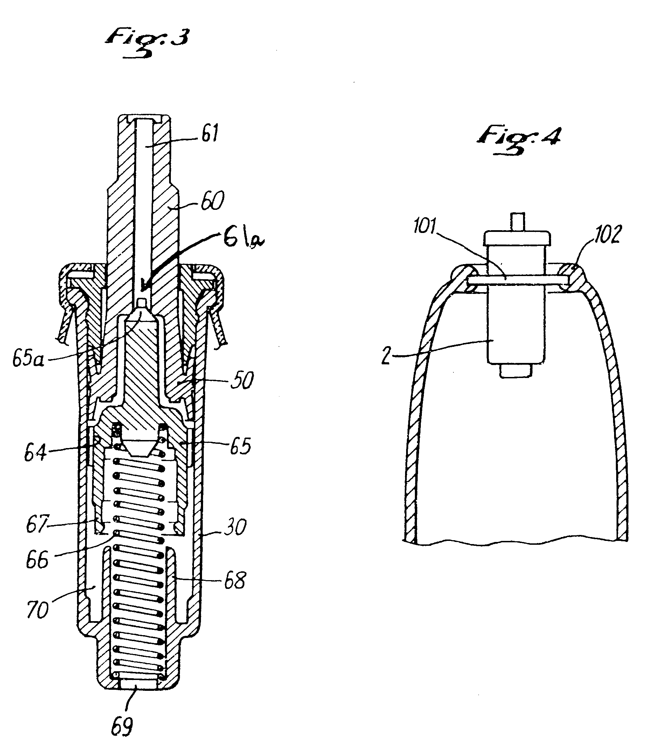

Le dispositif représenté en coupe sur les figures 1 et 2 est constitué d'un tube souple 1, du genre tube dentifrice, en métal (aluminium) ou en plastique. Ce tube contient un produit pâteux, une crème, une huile, voire un produit liquide. Sur l'embout fileté 1a de ce tube est monte par vissage un dispositif doseur avec pompe 2. Ce dispositif (en soi connu par exemple du type décrit dans FR-A-2 343 137) comporte un corps de pompe 3 fermé à sa partie inférieure par un clapet libre 4, obturant une ouverture 10 formee au fond du corps de pompe. Dans le corps 3, est disposé un piston 5 pouvant glisser dans le corps en assurant l'étanchéité le long de la paroi interne du corps. Le piston est monté glissant sur une tige 6 formée avec une bride 6a présentant un gradin vers le haut et vers le bas. Vers le haut, la bride 6a vient en butee contre un joint annulaire 7, maintenue contre l'ouverture supérieure du corps de pompe par une capsule 8 sertie sur un rebord du corps, et dont le bord extérieur forme un pas de vis adapté à l'embout fileté 1a du tube 1. Contre la face inférieure de la bride 6a est appuyee une extrémité d'un ressort 9, dont l'autre extrémité est en appui contre 1a face supérieure du piston 5. Un ressort de rappel 11, logé dans la partie inférieure du corps de pompe, prend appui par son extremite inférieure contre le fond du corps de pompe, et par son extrémité superieure contre la face inferieure du piston 5. La tige 6 comporte un canal central 61, ouvert à l'extrémité supérieure de la tige 6 et fermé à l'extrémité inférieure. Un canal 62 radial débouchant dans la chambre par un orifice 62a établit une communication entre le canal 61 et l'extérieur de la tige à un niveau situé immédiatement en dessous du piston 5 quand celui-ci est en position supérieure, c'est-à-dire quand le piston, par son bord supérieur, est appliqué contre le joint 7. Un joint annulaire 12 est placé sous le piston 5, de façon à obturer le canal 62. Au repos, le ressort 11 exerce une force supérieure à celle qui est exercée par le ressort 9. Par conséquent, le ressort 11 sollicite le piston 5 vers le haut, contre le joint 7, et par l'intermédiaire du ressort 9, il sollicite également la bride 6a contre le joint 7. La partie inférieure du corps de pompe délimite avec le piston 5 une chambre de dosage 14. L'extrémité supérieure de la tige 6 est coiffée d'un poussoir 15 comportant un canal d'évacuation 16 assurant une communication entre le canal 61 et l'extérieur, pour l'évacuation du produit contenu dans le tube 1.

Le dispositif fonctionne de la façon suivante. Quand on appuie sur le poussoir 15, on fait descendre la tige 6, et celle-ci, grâce à la bride 6a et au ressort 9 fait descendre le piston 5. Le produit contenu dans la chambre 14 est comprimé, ce qui maintient le clapet 4 appuyé sur son siège. La pression monte dans la chambre 14, ce qui empêche le piston 5 de descendre davantage. Quand on continue à appuyer sur le poussoir 15, la tige 6 continue à descendre et l'orifice du canal 62 se dégage en dessous du joint 12. Le produit contenu dans la chambre 9 s'échappe alors sous la pression, par le canal 62, le canal 61 et le canal 16, jusqu'à l'extérieur (voir figure 2). Quand le bord inférieur du piston 5 parvient au fond du corps de pompe, le mouvement est arrêté, et une dose de produit a été expulsée à l'extérieur par le canal 16. On cesse d'appuyer sur le poussoir 15 et le ressort 11 ramène le piston 5 et la tige 6 à la position de repos. Ce mouvement aspire du produit hors du tube 1 à travers l'orifice 10 tandis que le clapet 4 se soulève. En pressant manuellement le tube 1, on facilite le remplissage (ou l'amorçage) de la chambre 14. On remarquera que la pression exercée sur le tube ne peut faire sortir le produit du doseur, car une surpression dans la chambre 14 à l'état de repos applique le piston et la bride 6a contre le joint 7. Cela ne peut en aucun cas découvrir l'orifice du canal 62 qui reste fermé. L'ouverture du canal de sortie de la pompe 2 est commandée par l'actionnement du poussoir 15. En l'absence d'actionnement, rien ne peut sortir de la chambre de dosage. Un tel système fonctionne sans aucune mise à l'air du produit, qui est ainsi préservé de la pollution et ne sèche pas ; ce fonctionnement différe du fonctionnement normal d'une pompe pour laquelle habituellement le volume expulsé est remplacé par de l'air.

La figure 3 est une vue correspondant à la figure 1, avec un autre type de doseur.

Dans un but de simplification, le tube 1 n'a pas été représenté. Ce doseur (également en soi connu, par exemple du type décrit dans FR-A-2 305 241) comporte un corps de pompe 30 dans lequel est monté coulissant un piston 50 annulaire, solidaire d'une tige creuse 60 percée d'un canal central 61 débouchant au bas de la tige par un orifice 61a. Dans le corps de sous le piston 50, est monté un clapet 65, dont la partie supérieure 65a forme un pointeau obturant l'orifice 61a quand il est sollicité vers le haut par un ressort 66, dont l'extrémité supérieure prend appui sous le clapet et l'extrémité inférieure sur le fond du corps de pompe. Le clapet peut coulisser dans le corps de pompe, et peut être, pour cela, guidé par des nervures 64 laissant libre le passage entre elles. Le clapet 65 est prolongé vers le bas par une jupe 67. Un cylindre 68 est fixé verticalement et axialement au fond du corps de pompe. Ce fond comporte une ouverture 69 dans l'axe du cylindre 68. Les diamètres de la jupe 67 et du cylindre 68 sont choisis différents de façon que l'un puisse rentrer dans l'autre en assurant l'étanchéité.

Quand on appuie sur la tige 60, elle descend en entraînant le clapet 65 : la jupe 67 vient coiffer le cylindre 68, ce qui ferme et délimite une chambre de dosage 70. Si l'on continue à faire descendre la tige 60, la pression, augmentant dans la chambre 70, décolle le clapet du piston 50 contre la force du ressort, ce qui met le canal 61 en communication avec la chambre 70.

A l'inverse du dispositif précédent, c'est le mouvement commandé du piston qui ferme le clapet d'aspiration de la pompe. Mais le clapet de refoulement (pointeau 65a) ne peut s'ouvrir que sous l'effet d'une pression suffisante, qui ne peut être obtenue qu'en exerçant une pression assez forte sur le poussoir quand la chambre de dosage est fermée. Cette version présente l'avantage d'avoir un chemin dégagé pour le passage du produit, ce qui est avantageux pour la distribution d'un produit pâteux. Comme pour l'exemple précédent, il n'y a pas de mise à l'air du produit.

Dans les exemples proposes, le doseur est fixé sur le tube souple par vissage. On peut ainsi adapter le doseur sur n'importe quel tube souple. Il est aussi possible (figure 4) de surmouler un tube plastique sur un doseur en plastique. Le corps de pompe 2 du doseur comporte à cet effet une collerette 101. Le surmoulage est réalisé avec un bourrelet 102, moule en une seule pièce avec le tube 1. Celui-ci est ensuite rempli et fermé par soudure. On peut utiliser n'importe quel doseur selon la revendication 1, pourvu qu'il soit muni d'une collerette plastique susceptible de se fixer par surmoulage.

## Revendications

1. Dispositif doseur pour produit pâteux ou semi-liquide, comportant en combinaison
- un récipient pour contenir le produit,
- une pompe doseuse pour distribuer le produit, fonctionnant sans remise à l'air libre du récipient, ladite pompe comportant un corps de pompe (3;30), avec un piston (5;50) mobile dans le corps de pompe à partir d'une position de repos et définissant une chambre de dosage (14;70), ladite pompe comportant en outre un orifice obturable d'aspiration (10;69) et un orifice obturable de refoulement (61,62;61a), l'orifice d'aspiration étant obturé lorsque le piston est déplacé en s'éloignant de sa position de repos, et l'orifice de refoulement étant obturé lorsque le piston est déplacé vers sa position de repos,
dans lequel la pompe comporte en outre un ressort de rappel (11;66) qui sollicite le piston vers sa position de repos, l'orifice de refoulement (61, 62 61a) est obturable par un organe d'obturation (5, 65a) sollicité par un ressort de précompression (9, 66) vers une position où il obture l'orfice de refoulement, et lorsque le piston est déplacé à partir de sa position de repos, l'organe d'obturation n'ouvre l'orifice de refoulement que lorsqu'il règne dans la chambre de dosage une pression supérieure à un seuil prédétermineé, ledit récipient étant un tube souple (1) en métal ou en plastique, destiné à être tenu à la main par un utilisateur et accessible pour que l'utilisateur puisse le presser manuellement, ledit tube souple (1) étant adapté à s'aplatir sous l'effet de l'aspiration de la pompe et de la pression atmosphérique, et la pompe ne comporte pas de tube plongeur, de sorte que la pompe peut aspirer sensiblement tout le produit contenu dans le tube souple.

2. Dispositif selon la revendication 1, dans lequel le piston (5) est monté coulissant sur une tige (6) dotée d'un canal central (61) qui débouche latéralement par un passage latéral (62), ledit passage latéral constitue l'orifice de refoulement, le piston (5) constitue l'organe d'obturation dudit orifice de refoulement, le ressort de précompression (9) est monté entre la tige (6) et le piston (5) et sollicite le piston (5) vers la chambre de dosage (14).

3. Dispositif selon la revendication 2, dans lequel, lorsque le piston (5) est dans sa position de repos, ledit piston est en butée contre une partie (7) solidaire du corps de pompe, qui limite le mouvement dudit piston (5) en éloignement de la chambre de dosage (14).

4. Dispositif selon la revendication 1, dans lequel l'orifice de refoulement (61) est solidaire du piston (50), l'organe d'obturation de l'orifice de refoulement est un pointeau (65a), ledit pointeau est sollicité vers l'orifice de refoulement (61) par le ressort de rappel (66) du piston, qui sert de ressort de précompression, le pointeau est solidaire d'un organe (67) d'obturation de l'orifice d'aspiration (69) et le corps de pompe (30) comporte un conduit (68) qui entoure l'orifice d'aspiration (69), ledit organe d'obturation de l'orifice d'aspiration pouvant coopérer par emboîtement avec ledit conduit (68) pour obturer l'orifice d'aspiration. (69) lorsque le piston (50) est déplacé à partir de sa position de repos en repoussant le pointeau (65a).

5. Dispositif selon la revendication 4, dans lequel ledit organe d'obturation de l'orifice d'aspiration est une jupe (67) adaptée à s'emmancher sur le conduit (68) qui entoure l'orifice d'aspiration.

6. Dispositif selon une quelconque des revendications précédentes, dans lequel le tube souple (1) est en matière plastique.

7. Dispositif selon une quelconque des revendications précédentes, dans lequel le tube souple (1) est métallique.

## Claims

1. A portioning device for dispensing a paste or semi-liquid product, comprising in combination:
- a receptacle for containing said product,
- a portioning pump for dispensing said product, said pump being operated without air intake, in the receptacle, said pump having a pump casing (3, 30), with a piston (5, 50) slidable within said pump casing from a rest position, said piston defining a portioning chamber (14, 70), said pump further comprising a closable suction orifice (10, 69) and a closable delivery orifice (61, 62, 61a), said suction orifice being obturated when the piston is displaced from its rest position, and said delivery orifice being obturated,when the piston is displaced towards its rest position,
wherein said pump further includes a return spring (11, 66) which biasses the piston towards its rest position, said delivery orifice (61, 62, 61a) is obturable through an obturation member (5, 65a) which is biassed by a precompression spring (9, 66) towards a position where said obturation member obturates said delivery orifice, and when the piston is displaced from its rest position, said obturation member does not open the delivery orifice until the pressure in the portioning chamber exceeds a predetermined threshold, said receptacle being a metal or plastic flexible tube, suitable for being held in the hand of a user and accessible so that the user can manually press said tube, said flexible tube being suitable for flattening under the suction of the pump and the atmospheric pressure, and said pump has no dip tube, so that said pump can such substantially all the product contained in said flexible tube.

2. A device according to claim 1, wherein said piston (5) slides on a stem (6) which has a central channel (61) opening laterally through a lateral passage (62), said lateral passage constitutes said delivery orifice, said piston (5) constitutes said obturation member for said delivery orifice, said precompression spring (9) is disposed between said stem (6) and said piston (5), and said precompression spring (9) biasses said piston (5) towards said portioning chamber (14).

3. A device according to claim 2, wherein, when the piston (5) is in its rest position, said piston abuts against a portion (7) integral with pump casing, which limits the movement of said piston (5) away from the portioning chamber (14).

4. A device according to claim 1, wherein the delivery orifice (61) is integral with the piston (50), the obturation member is a needle (65a), said needle is biassed through said return spring (66) of the piston, towards the delivery orifice (61), said return spring thus acting as a precompression spring, the needle is integral with an obturation member (67) for the suction orifice (69), and said pump casing (30) includes a duct (68) which surrounds the suction orifice (69), said obturation member being able to cooperate with said duct (68) through fitting into each other, for obturating said suction orifice (69) when said piston (50) is displaced from its rest position and pushes the needle (65a).

5. A device according to claim 4, wherein said obturation member for said suction orifice, is a skirt (67) suitable for engaging on said duct (68) which surrounds the suction orifice.

6. A device according to any one of the preceding claims, wherein said flexible tube (1) is made of plastic.

7. A device according to any one of the preceding claims, wherein said flexible tube (1) is made of metal.

## Patentansprüche

1. Dosiervorrichtung für ein pastenförmiges oder halbflüssiges Produkt, die in Kombination aufweist:
- einen Behälter zur Aufnahme des Produkts,
- eine Dosierpumpe zur Ausgabe des Produkts, ohne daß der Behälter wieder der Luft ausgesetzt wird, wobei die Pumpe einen Pumpenkörper (3; 30) mit einem Kolben (5; 50) aufweist, der im Pumpenkörper ausgehend von einer Ruhestellung beweglich ist und eine Dosierkammer (14; 70) abgrenzt, wobei die Pumpe außerdem eine verschließbare Ansaugöffnung (10; 69) und eine verschließbare Förderöffnung (61, 62; 61a) aufweist, wobei die Ansaugöffnung verschlossen wird, wenn der Kolben von seiner Ruhestellung weg bewegt wird, und die Förderöffnung verschlossen wird, wenn der Kolben in seine Ruhestellung bewegt wird,
in der die Pumpe weiter eine Rückholfeder (11; 66) aufweist, die den Kolben in seine Ruhestellung zieht, die Förderöffnung (61, 62; 61a) durch ein Verschließorgan (5, 65a) verschließbar ist, das von einer Vorverdichtungsfeder (9, 66) in eine Position gezogen wird, wo es die Förderöffnung verschließt, und wenn der Kolben aus seiner Ruhestellung heraus bewegt wird, öffnet das Verschließorgan die Förderöffnung nur, wenn in der Dosierkammer ein Druck herrscht, der höher ist als ein vorbestimmter Schwellwert, wobei der Behälter eine biegsame Tube (1) aus Metall oder Kunststoff ist, die von einem Benutzer in der Hand gehalten wird und zugänglich ist, damit der Benutzer sie mit der Hand zusammendrücken kann, wobei die biegsame Tube (1) sich unter dem Einfluß der Saugwirkung der Pumpe und des Atmosphärendrucks abflachen kann und die Pumpe kein Tauchrohr aufweist, so daß die Pumpe im wesentlichen das ganze in der biegsamen Tube enthaltene Produkt ansaugen kann.

2. Vorrichtung nach Anspruch 1, in der der Kolben (5) gleitend auf einem Stab (6) mit einem zentralen Kanal (61) angeordnet ist, der seitlich in einem seitlichen Auslaß (62) mündet, wobei der seitliche Auslaß die Förderöffnung bildet, der Kolben (5) das Verschließorgan der Förderöffnung darstellt, die Vorverdichtungsfeder (9) zwischen dem Stab (6) und dem Kolben (5) angeordnet ist und den Kolben (5) zur Dosierkammer (14) zieht.

3. Vorrichtung nach Anspruch 2, in der der Kolben (5), wenn er sich in seiner Ruhestellung befindet, gegen einen fest mit dem Pumpenkörper verbundenen Bereich (7) in Anschlag liegt, der die Bewegung des Kolbens (5) in Richtung der Entfernung von der Dosierkammer (14) begrenzt.

4. Vorrichtung nach Anspruch 1, in der die Förderöffnung (61) fest mit dem Kolben (50) verbunden ist, das Verschließorgan der Förderöffnung ein Stift (65a) ist, dieser Stift von der Rückholfeder (66) des Kolbens, die als Vorverdichtungsfeder wirkt, zur Förderöffnung (61) gezogen wird, der Stift fest mit einem Organ (67) zum Verschließen der Ansaugöffnung (69) verbunden ist und der Pumpenkörper (30) eine Leitung (68) aufweist, die die Ansaugöffnung (69) umgibt, wobei das Organ zum Verschließen der Ansaugöffnung durch Ineinanderschieben mit der Leitung (68) zusammenwirken kann, um die Ansaugöffnung (69) zu verschließen, wenn der Kolben (50) aus seiner Ruhestellung heraus bewegt wird und dabei den Stift (65a) zurückstößt.

5. Vorrichtung nach Anspruch 4, in der das Organ zum Verschließen der Ansaugöffnung eine Schürze (67) ist, die sich auf die Leitung (68) aufschieben kann, die die Ansaugöffnung umgibt.

6. Vorrichtung nach einem beliebigen der vorhergehenden Ansprüche, in der die biegsame Tube (1) aus Kunststoffmaterial ist.

7. Vorrichtung nach einem beliebigen der vorhergehenden Ansprüche, in der die biegsame Tube (1) aus Metall ist.
